(19) Europäisches Patentamt / European Patent Office / Office européen des brevets

(11) **EP 3 476 078 B1**

(12) **EUROPEAN PATENT SPECIFICATION**

(45) Date of publication and mention
of the grant of the patent:
**27.05.2020 Bulletin 2020/22**

(21) Application number: **17745505.2**

(22) Date of filing: **28.06.2017**

(51) Int Cl.:
**H04L 9/32** *(2006.01)*　　　**H04L 9/08** *(2006.01)*

(86) International application number:
**PCT/IB2017/053891**

(87) International publication number:
**WO 2018/002856 (04.01.2018 Gazette 2018/01)**

(54) **SYSTEMS AND METHODS FOR AUTHENTICATING COMMUNICATIONS USING A SINGLE MESSAGE EXCHANGE AND SYMMETRIC KEY**

SYSTEME UND VERFAHREN ZUR AUTHENTIFIZIERUNG VON KOMMUNIKATION UNTER VERWENDUNG EINES EINZELNACHRICHTENAUSTAUSCHS UND SYMMETRISCHEN SCHLÜSSELS

SYSTÈMES ET PROCÉDÉS POUR AUTHENTIFIER DES COMMUNICATIONS À L'AIDE D'UN SEUL ÉCHANGE DE MESSAGE ET D'UNE CLÉ SYMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2016 US 201662355727 P**

(43) Date of publication of application:
**01.05.2019 Bulletin 2019/18**

(73) Proprietor: **Verimatrix GmbH
85737 Ismaning (DE)**

(72) Inventor: **BARTH, Ingo
85774 Unterföhring (DE)**

(74) Representative: **Patentanwaltskanzlei
Matschnig & Forsthuber OG
Biberstraße 22
Postfach 36
1010 Wien (AT)**

(56) References cited:
**WO-A1-2004/014018　　US-A1- 2011 183 748
US-A1- 2016 119 318**

**Description**

FIELD OF THE INVENTION

The present invention relates generally to secure communications and more specifically to coordinating a secure channel with minimal initial message exchange.

BACKGROUND

Authentication and encryption are two processes that can be important to securing data. Authentication is a term that is typically used to describe processes that are designed to ensure that the two devices that are communicating are in fact, who they say they are and not a device pretending to be a trusted device. Authentication is often discussed in terms of a process of establishing trust prior to sending sensitive information. Many authentication processes involve establishing a session key after trust is established and using the session key to encrypt future communications between devices. Encryption is a term that used to describe processes that reversibly alter data so that intercepted data is meaningless.

In many instances, authentication processes use encryption processes to secure the messages that are exchanged as each device authenticates itself. Authentication processes often use asymmetric encryption algorithms. Typical asymmetric encryption algorithms allow for a public key that can be used to verify that a signature contained within an authentication messages was produced using a private key, where the public key may be publicly well known and the private key must be kept secret. In contrast, a symmetric encryption algorithm typically utilizes a shared secret that is a key that is private to and kept secret by the two entities that are communicating. Session keys are often examples of symmetric encryption keys. Following authentication, a (temporary) session key can be established between the trusted devices and can be used in rapid encryption and decryption algorithms to securely transmit data between the two trusted devices.

Document WO 2004/014018 A1 discloses a method for producing a common key, wherein a first entity produces a first entity key and sends a request to a second entity, which request is generated by means of the first entity key and encoded at the first entity by means of a public key of the second entity, and the second entity decodes the request, produces a second entity key, generates a reply by means of the second entity key, and transmits the reply to the first entity; a common key is produced by using both the first entity key and the second entity key. Other methods employing encryption and authentication of messages are described in US 2016/0119318 A1 and US 2011/0183748 A1.

SUMMARY OF THE INVENTION

The invention is directed at a method as described in claim 1. Further optional features are described in the dependent claims.

Systems and methods for authenticating communications using a single message exchange and symmetric key in accordance with embodiments of the inventions are disclosed. In one embodiment, a method of authenticating a first device to a second device and establishing a session key for secure communications using a shared secret in a single message exchange includes generating encrypted payload data from a root key, a random number, an initial value, unencrypted payload data, and a plurality of identifiers using an encryption operation using a first messaging device, where the root key is a shared secret between the first messaging device and a second messaging device, generating a cryptographic hash of the encrypted payload data to produce a first hash value using the first messaging device, generating an electronic signature of the encrypted payload data from the first hash value and plurality of identifiers using the encryption operation using the first messaging device, transmitting the plurality of identifiers, the electronic signature, and the encrypted payload data using the first messaging device to the second messaging device, receiving the plurality of identifiers, the electronic signature, and the encrypted payload data from the message using a second messaging device, generating a cryptographic hash of the encrypted payload to produce a second hash value using the second messaging device, verifying the received electronic signature using at least a portion of the second hash value and the received plurality of identifiers using the second messaging device, decrypting the encrypted payload data using a decryption operation using the root key, the received identifiers and at least a portion of the received electronic signature using the second messaging device to recover the random number, and establishing a secure channel for subsequent communications between the first messaging device and second messaging device using the random number as key material for a session key to secure the channel.

In a further embodiment, the method also includes generating the random number.

In another embodiment, the encryption operation and decryption operation are block ciphers.

In a still further embodiment, the plurality of identifiers includes a provider identifier, a chipset identifier, and a sequence number.

In still another embodiment, the method includes sending a plurality of additional messages encrypted using the session key between the first device and the second device, where each of the additional messages includes a sequence number that is incremented over the sequence number included in the previous message.

In a yet further embodiment, the method of claim 1 includes expiring the session key, generating a second random number using the first messaging device, repeating the encrypting, transmitting, and decrypting operations in a single message exchange to communicate the second random number to the second messaging device, and establishing a secure channel for subsequent communications between the first messaging device and second messaging device using the second random number as key material for a session key to secure the channel.

In yet another embodiment, the second messaging device stores a root key lookup table and locates the correct root key associated with the first messaging device using the chipset identifier.

BRIEF DESCRIPTION OF THE DRAWINGS

Fig. 1 is a system overview of a system for authenticating and securing communications using a single message exchange and symmetric key in accordance with embodiments of the invention.
Fig. 2 is a flow chart illustrating a process for encrypting an initial message for authenticating and securing communications using a symmetric key in accordance with embodiments of the invention.
Fig. 3 is a flow chart illustrating a process for decrypting an initial message for authenticating and securing communications using a symmetric key in accordance with embodiments of the invention.

DETAILED DISCLOSURE OF THE INVENTION

Systems and methods in accordance with embodiments of the invention utilize a symmetric key to transmit encrypted data during a session in which the first transmitted message can be utilized both for authentication and communication of encrypted data. In many embodiments, a sender device initiates an encrypted communication session by sending an initial message to a receiver device that responds to the initial message with its own response message that can be generated based upon information contained within the initial message and using the same cryptographic processes used to encrypt and sign the first message. In many embodiments of the invention, a single exchange of an initial message and a response message provides sufficient information to authenticate the devices and/or establish a session key that can be used to decrypt encrypted data contained within the initial message and the response message. In this way, a small amount of encrypted data can be passed between the sender device and the receiver device without the need to send a message that does not contain data to first establish an encrypted session before commencing transmission of encrypted data. In some embodiments, the first device is a client playback device (e.g., a cable or IPTV set-top box, media device, smart phone or device, television, or personal computer) and the second device is a server at the head-end of a content provider or other service provider. In other embodiments, the first device is a server at the head-end and the second device is a client playback device. As would be appreciated by one skilled in the art, the first device and second device may be any of a variety of devices that seek to establish secure communications.

In several embodiments, the sender device and the receiver device each store a root key in a secure chip set such that the root key can only be accessed by an encryption/decryption operation that the chip set is configured to perform. In further embodiments, the root key is stored in a portion of the secure chip set that is one time programmable (OTP) non-volatile memory. In other embodiments, the root key is not stored in a secure chip set. For example, if the sender device and/or the receiver device are in a secure or trusted location or there are otherwise minimal concerns over access to the root key, the root key need not be stored on a secure chip set. The devices are configured to generate messages containing information that can authenticate one device to the other and/or establish a session key that can be used for subsequent communications. In many embodiments, the root key is used in combination with encryption and decryption algorithms that are common to both devices that enable the generation a digital signature that can be used to authenticate a sender device to a receiver device. In a number of embodiments, the data is encrypted in such a way that the receiver device must successfully authenticate the sender device to obtain a piece of information used in the decryption of the encrypted data. In this way a single message containing the digital signature can also contain encrypted data that can only be decrypted by a device that shares the root key and has knowledge of the overall trust and encryption framework being utilized by the sender device.

Various embodiments of the invention implement encryption using a symmetric key and other parameters so that an initial message is self-authenticating. A single message exchange (one message in each direction) can establish a session key that may be used to decrypt data contained within the initial and responses messages and/or for subsequent communication. An additional parameter in the encryption operation can be a random or pseudo-randomly generated number to increase the security of encrypted data. Other parameters in the encryption operation can include a service provider identifier (PSep) that can be used, for example, to distinguish between different content or communications system providers. A chipset identifier (chipId) can be used to uniquely identify the chipset used by the sender and receiver devices in the encryption and decryption operations. In several embodiments, the chipset identifier is in one time programmable memory and cannot be easily modified. A sequence number (seqNr) can be used to identify the particular exchange or transaction involving the encryption operation to establish secure communications (e.g., by establishing a session key and/or authentication information). The sender and/or receiver devices can use the sequence number to detect suspicious messages that are out of sequence order and/or repeat a previously used sequence number. In further embodiments, the device includes a random number generator to create randomized inputs for the encryption process. Many of the parameters discussed above can also be used in the corresponding decryption operation.

Many embodiments utilize Advanced Encryption Standard (AES) encryption in Cipher Block Chaining (CBC) mode of operation. Additional embodiments of the invention may utilized any of a variety of encryption schemes and modes of operation as appropriate to a particular application.

Devices that can establish secure communications over a network in accordance with embodiments of the invention are discussed below.

### System Architecture and Devices

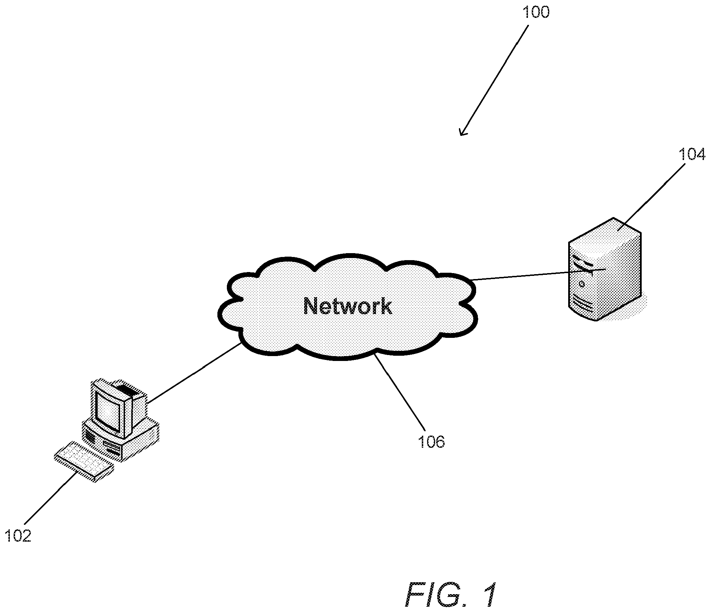

A message authentication and communication security system in accordance with embodiments of the invention is illustrated in Fig. 1. The illustrated system 100 includes a first device 102 and a second device 104 that may communicate over a network 106 such as the internet or other wide or local area network. The first device can be a client playback device (e.g., a cable or IPTV set-top box, media device, smart phone or device, television, or personal computer) and the second device can be a server at the head-end of a content provider or other service provider. In client-server systems that deliver media content, it is common for a client playback device to initiate communications with the media server. Thus, in many embodiments a client playback device can be referred to as the sender device and the media server can be referred to as the receiver device. However, in various embodiments any of a variety of devices may take the role of sender or receiver entities as appropriate to the particular application.

In many embodiments, each entity contains a secure chipset that includes measures preventing access of protected memory on the chipset, where cryptographic material such as encryption keys may be stored. Such measures may include a hardware security module or other hardened security. In several embodiments, the chipset is configured to perform an encryption operation and/or decryption operation that are the only ways to access certain encryption keys in the protected memory. In some embodiments, the protected memory is one time programmable (OTP) memory. In other embodiments, the protected memory is a feature or secure area of a processor referred to as a Trusted Execution Environment (TEE) that offers an isolated execution from the main operating system, confidentiality, and other security measures. A list of operations that a chipset may perform to generate a message containing encrypted data and sufficient information to authenticate that the sender device is the originator of the message is discussed below.

List of Operations

The various operations that may be performed to generate data strings for message authentication in accordance with embodiments of the invention are listed below. The initial two operations are the process for encrypting data (BCEnc) and the process for decrypting data (BCDec). These processes can utilize block ciphers, which are cryptographic functions that apply a fixed transformation to a block of data having a fixed length, where the transformation is determined based upon a symmetric key that can be utilized both in the encryption and the decryption of the block of data. While the encryption and decryption processes described below utilize block ciphers, any of a variety of encryption processes that utilize shared symmetric keys can be utilized as appropriate to the requirements of specific applications in accordance with embodiments of the invention.

$$BCEnc: encData = BCEnc(\text{key set, initial value, data}) \qquad (1)$$

The above encryption operation BCEnc calculates a key using a block cipher that takes as inputs a set of two or more encryption keys (the key set) that can be utilized to generate a cryptographic key utilized in the encryption of at least a portion of the *data*. As will be discussed further below, a key set can include pieces of data such as, but not limited to, a random number, service provider identifier, a chipset identifier, a sequence number, and/or a combination of any of these pieces of data by concatenation. In several embodiments, an additional input to the encryption operation (in some embodiments a block cipher) is a root key.

An initial value is also used in the block cipher encryption operation performed on the *data*. The result is the encrypted (*encData*). In some embodiments, a first initial value for a first round is zero and the initial value for a subsequent round is a result from a previous round. In several embodiments, a root key is the shared secret that is used as an input to both the encryption and decryption operations and can be used to generate one or more additional keys in the key set using techniques including (but not limited to) a key chain. The root key may be stored in secure protected memory of the chipset on both the sender device and receiver device. In some embodiments, the secure protected memory is one time programmable (OTP) memory.

$$\text{BCDec: } data = \text{BCDec}(\text{key set, initial value, encData}) \tag{2}$$

The above decryption operation BCDec can involve calculation of a cryptographic key using a block cipher based upon a key set and/or a root key. The initial value is used for the CBC-decryption operation performed on *encData.* The result is the decrypted data in *data.*

In order to simplify discussion of the use of the above operations in authentication and encryption processes in accordance with various embodiments of the invention, it can be helpful to define the different types of data that are used in several such processes. Although specific pieces of data are referenced below, the data that is utilized in a given process is typically determined by the requirements of that application.

Signature: data forming the verification information.
PSep: data that can be used as an identifier for a service provider. For example, a particular provider of media content may identify its head end system to reduce the likelihood of comprising security with communications of the head end system of another provider. In several embodiments the data is 16 bytes long.
chipId: data that provides a chipset identifier.
seqNr: sequence number to indicate or identify a particular message exchange or transaction. In some embodiments, a bit in seqNr (for example, the first or last bit) can be reserved to indicate which entity has sent the message. For example, the sender device can use a bit value of 0 for the encryption operation and 1 for the decryption operation, and the receiver device can use the reverse.

In many embodiments, identifiers such as, but not limited to, a PSep, a chipID, and/or a seqNr are included in a key set utilized in encryption and/or decryption operations as discussed further above.

**Processes for Securely Transmitting Data**

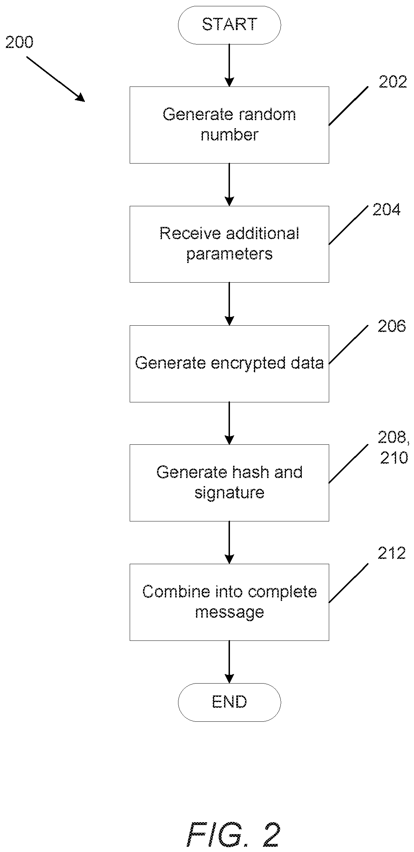

A process for securely sending a message from a first device (sender device) to a second device (receiver device) to establish trusted communications in accordance with embodiments of the invention is illustrated in Fig. 2. Through the process, data that is to be transmitted is processed through an encryption operation that also generates a signature that can be used to authenticate the sender device and provide cryptographic information used to successfully decrypt encrypted data contained within the message. In many embodiments, the first device and second device are configured for symmetric encryption with access to a block cipher. In certain embodiments, the cryptographic keys utilized by the block ciphers are generated using a shared root key. In many embodiments of the invention, trusted communications can be established by a single message exchange using the shared symmetric encryption.

The process 200 includes generating (202) a random or pseudo-random number to be used in the encryption operation.

The process includes receiving or retrieving (204) additional parameters as inputs to an encryption operation. Parameters can include (but are not limited to) the source data to be transmitted, a provider identifier (PSep), a chipset identifier (chipId), a sequence number (seqNr), and/or an initial value.

Encrypted payload data is generated (206) using a block cipher algorithm taking as inputs the random number, provider identifier, chip identifier, sequence number, initial value, and/or transmit data (the data that is to be transmitted). The length of the transmit data and/or encrypted payload data may be padded to a multiple of a number of bytes to facilitate use of a block cipher. In several embodiments, an initialization vector is only used as the initial value to generate one of the encrypted blocks and each encrypted block is used with another input to generate the next block.

A cryptographic hash is taken (208) of the encrypted payload data to produce a hash value. An electronic signature of the encrypted payload data is generated by performing (210) an encryption operation using the provider ID, at least a portion of the hash value and concatenated data that can be derived from any combination of one or more of the random number, chip identifier, sequence number, and/or provider ID. In some embodiments, the encryption operation used to generate the electronic signature is the same as the encryption operation used to generate the encrypted payload data.

The complete message to transmit is generated (212) as a concatenation of one or more (and in many instances all of) the chip ID, sequence number, provider ID, signature, and encrypted payload data. In many embodiments, the message can be sent to the receiver device over a network such as the Internet. Although a specific process is described above with respect to Fig. 2, one skilled in the art will recognize that any of a variety of processes may be utilized to construct an encrypted payload data for coordinating a secure channel in accordance with embodiments of the invention. Processes for receiving and authenticating data are described below.

**Processes for Receiving and Authenticating Data**

A receiver device can receive a message that includes encrypted payload data from a sender device, parse the message, and decrypt portions of the message to authenticate the sender and/or the information contained in the encrypted payload data. As discussed further above, a root key may act as a shared secret known only to the sender device and receiver device and stored in secure protected memory on each entity in many embodiments. In some embodiments, a chip ID can be used by a receiver device receiving the chip ID from a sender device to look up the correct root key used by that particular sender device. For example, a receiver device may store a lookup table of sender devices and their associated root keys for establishing communications with the various sender devices. In other embodiments, the root key can be obtained from an initial step of the decryption process such as by using a PSep.

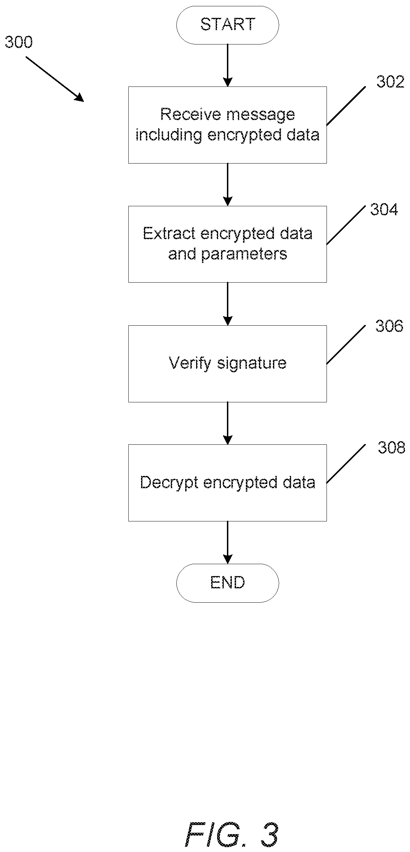

A process for receiving and authenticating a received message including encrypted payload data in accordance with embodiments of the invention is illustrated in Fig. 3. The process 300 includes receiving (302) the message containing encrypted payload data and obtaining the length (304) of the message. The encrypted payload data and other parameters are extracted (304) from the message using information concerning the length of the message and the length of the encrypted payload data.

A cryptographic hash is taken of the encrypted payload data that mirrors the cryptographic hash function performed to generate the electronic signature included in the message. The electronic signature is extracted from the received message and verified (306) by performing a decryption operation using at least a portion of the hash value and additional parameters, which can include (but are not limited to) a provider identifier (PSep), a chipset identifier (chipId), a sequence number (seqNr), and/or an initial value. In many embodiments, one or more of the additional parameters are contained in and extracted from the message received from the sender device.

The original transmit data is recovered by decrypting (308) the encrypted payload data that is extracted from the message. In many embodiments, the decryption operation can involve the use of a block cipher. In several embodiments, a process is utilized to generate a cryptographic key utilized by the block cipher, which takes as inputs one or more of the provider ID, a portion of the signature, the chip ID, and/or a sequence number. In many embodiments the decryption operation and/or block cipher utilizes the root key that is a shared secret with the sender device. In further embodiments, the receiver device stores a lookup table of root keys shared with different sender devices and a chipId or other identifier is used to determine the correct root key from the lookup table. The decryption operation can further take as inputs an initial value, and/or at least a portion of the encrypted payload data. In several embodiments, a vector filled with 0-bytes only is used as the initial value to generate one of the decrypted blocks and each decrypted block is used with another input to generate the next block. Any padding that is present can be removed and the decrypted data is returned.

In several embodiments of the invention, subsequent communication between the sender device and receiver device can utilize the above processes with the random number R and the last signature received and by incrementing the sequence number. The operations could then involve sending only the sequence number and encrypted payload data from the sender device to the receiver device.

In some embodiments, a global PSep value can be used for the first message exchange from a first entity to the second entity and a unique PSep can be returned from the second entity to the first entity that is to be used for subsequent communications.

Storing the last used sequence number on each of the sender and receiver entities can be used to detect clone devices. If a sequence number within a message that is received is a duplicate or out of order, then the sender of the message may have been compromised.

In many embodiments, a secure channel between the first (or sender) device and the second (or receiver) device can be established after the initial back-and-forth message exchange using a session key that is a shared secret of (i.e., known only to) the two devices. In several embodiments, the session key is the random number R used in the initial message exchange. In other embodiments, the session key may be derived from or generated from the random number R using processes known to or established by the two devices. One skilled in the art will recognize that any of a variety of processes may be utilized to establish a session key as a shared secret between the first and second device for secure communications in accordance with embodiments of the invention. In further embodiments, the session key may be expired after a predetermined time or amount of secure communications and/or further message exchanges such as in the processes described above can be used to establish a new session key between the devices.

In the processes described above with reference to Figs. 2 and 3, a random number is used in encrypting the payload data contained within the message and the electronic signature is created from the random number and identifying information such as (but not limited to) the chipID encrypted using a hash of the encrypted payload data. Accordingly, the electronic signature is bound to the encrypted payload data in a way that prevents the electronic signature from being used with a message containing different data encrypted using the same random number. If the signature were used with a different message, the cryptographic hash of the message would not enable the decryption of the signature. In this way, the receiver device can trust the received message. Assuming the receiving device can decrypt the electronic signature to obtain from the encrypted payload data identifying information that matches the identifying information the message uses to describe itself, the receiver device knows that the encrypted payload data within the message is the encrypted payload data actually transmitted by the sender device. The decryption of the signature also provides the random number used in the encryption of the data and the receiver device can use this information to decrypt the transmitted data. Although a specific process is described above with respect to Fig. 3, one skilled in the art will recognize that any of a variety of processes may be utilized to authenticate and decrypt an encrypted payload data for coordinating a secure channel in accordance with embodiments of the invention.

While specific processes for generating the encrypted message data and the encrypted data used in a digital signature are described above with reference to Figs. 2 and 3, as can readily be appreciated that the specific encryption/decryption processes that rely upon symmetric keys used in the encryption/decryption of the data and/or the specific pieces of identifying data can vary based upon the requirements of specific applications. For example, separate sequence numbers can be utilized by the sender device and/or the receiver device and/or two or more random numbers can be utilized in the encryption of the message data. Accordingly, processes in accordance with various embodiments of the invention are not limited to the specific processes described above.

Although the description above contains many specificities, these should not be construed as limiting the scope of the invention but as merely providing illustrations of some of the presently preferred embodiments of the invention. Various other embodiments are possible within its scope. Accordingly, the scope of the invention should be determined not by the embodiments illustrated, but by the appended claims and their equivalents.

**Claims**

1. A method of authenticating a first messaging device to a second messaging device and establishing a session key for secure communications using a shared secret in a single message exchange, the method comprising:

   generating (206) encrypted payload data from unencrypted payload data using a cryptographic key generated by a block cipher encryption operation from a root key, a random number, an initial value, and a plurality of identifiers using the first messaging device, wherein
   the root key is a shared secret between the first messaging device and the second messaging device;
   generating (208) a cryptographic hash of the encrypted payload data to produce a first hash value using the first messaging device;
   generating (210) an electronic signature of the encrypted payload data from the first hash value and plurality of identifiers using the block cipher encryption operation using the first messaging device;
   transmitting the plurality of identifiers, the electronic signature, and the encrypted payload data using the first messaging device to the second messaging device;
   receiving (302) the plurality of identifiers, the electronic signature, and the encrypted payload data from the message using the second messaging device;
   generating (304) a cryptographic hash of the encrypted payload to produce a second hash value using the second messaging device;
   verifying (306) the received electronic signature by performing a block cipher decryption operation using at least a portion of the second hash value and the received plurality of identifiers using the second messaging device;
   decrypting (308) the encrypted payload data using a cryptographic key generated by a block cipher decryption operation from the root key, the received identifiers and at least a portion of the received electronic signature using the second messaging device to recover the random number; and
   establishing a secure channel for subsequent communications by and between the first messaging device and second messaging device using the random number as key material for the session key to secure the channel.

2. The method of claim 1 further comprising generating the random number.

3. The method of claim 1 wherein the encryption operation and decryption operation are block ciphers.

4. The method of claim 1 wherein the plurality of identifiers includes a provider identifier, a chipset identifier, and a sequence number.

5. The method of claim 1 further comprising sending a plurality of additional messages encrypted using the session key between the first messaging device and the second messaging device,
where each of the additional messages includes a sequence number that is incremented over the sequence number included in a previous message.

6. The method of claim 1 further comprising:

   expiring the session key;
   generating a second random number using the first messaging device;
   repeating the encrypting, transmitting, and decrypting operations in a single message exchange to communicate the second random number to the second messaging device; and
   establishing a secure channel for subsequent communications between the first messaging device and second messaging device using the second random number as key material for a new session key to secure the channel.

7. The method of claim 1, wherein the second messaging device stores a root key lookup table and locates the correct root key associated with the first messaging device using the chipset identifier.

**Patentansprüche**

1. Verfahren zum Authentifizieren eines ersten Nachrichtenübermittlungsgeräts gegenüber einem zweiten Nachrichtenübermittlungsgerät und Einrichten eines Sitzungsschlüssels für sichere Kommunikationen unter Verwendung eines gemeinsamen Geheimnisses in einem Einzelnachrichtenaustausch, wobei das Verfahren umfasst:

   Erzeugen (206) verschlüsselter Nutzdaten aus unverschlüsselten Nutzdaten unter Verwendung eines kryptographischen Schlüssels, der durch einen Blockchiffre-Verschlüsselungsvorgang aus einem Root-Key, einer Zufallszahl, eines Anfangswerts und einer Vielzahl von Kennungen erzeugt worden ist, unter Verwendung des ersten Nachrichtenübermittlungsgeräts, wobei der Root-Key ein gemeinsames Geheimnis zwischen dem ersten und dem zweiten Nachrichtenübermittlungsgerät ist;
   Erzeugen (208) eines kryptographischen Hashs der verschlüsselten Nutzdaten zum Erstellen eines ersten Hashwerts unter Verwendung des ersten Nachrichtenübermittlungsgeräts;
   Erzeugen (210) einer elektronischen Signatur der verschlüsselten Nutzdaten aus dem ersten Hashwert und der Vielzahl von Kennungen mithilfe des Blockchiffre-Verschlüsselungsvorgangs unter Verwendung des ersten Nachrichtenübermittlungsgeräts;
   Übermitteln der Vielzahl von Kennungen, der elektronischen Signatur und der verschlüsselten Nutzdaten unter Verwendung des ersten Nachrichtenübermittlungsgeräts an das zweite Nachrichtenübermittlungsgerät;
   Empfangen (302) der Vielzahl von Kennungen, der elektronischen Signatur und der verschlüsselten Nutzdaten aus der Nachricht unter Verwendung des zweiten Nachrichtenübermittlungsgeräts;
   Erzeugen (304) eines kryptographischen Hashs der verschlüsselten Nutzdaten zum Erstellen eines zweiten Hashwerts unter Verwendung des zweiten Nachrichtenübermittlungsgeräts;
   Überprüfen (306) der empfangenen elektronischen Signatur durch Ausführen eines Blockchiffre-Verschlüsselungsvorgangs unter Verwendung zumindest eines Teils des zweiten Hashwerts und der empfangenen Vielzahl von Kennungen unter Verwendung des zweiten Nachrichtenübermittlungsgeräts;
   Entschlüsseln (308) der verschlüsselten Nutzdaten mithilfe eines kryptographischen Schlüssels, der durch einen Blockchiffre-Verschlüsselungsvorgang aus einem Root-Key, den empfangenen Kennungen und zumindest eines Teils der empfangenen elektronischen Signatur erzeugt worden ist, unter Verwendung des zweiten Nachrichtenübermittlungsgeräts, um die Zufallszahl zurückzugewinnen; und
   Einrichten eines sicheren Kanals für nachfolgende Kommunikationen von und zwischen dem ersten Nachrichtenübermittlungsgeräts und dem zweiten Nachrichtenübermittlungsgeräts mithilfe der Zufallszahl als Schlüsselmaterial für den Sitzungsschlüssel zum Sichern des Kanals.

2. Verfahren nach Anspruch 1, zudem umfassend das Erzeugen der Zufallszahl.

3. Verfahren nach Anspruch 1, bei welchem die Verschlüsselungs- und die Entschlüsselungsoperation Blockchiffren sind.

**4.** Verfahren nach Anspruch 1, wobei die Vielzahl von Kennungen eine Provider-Kennung, eine Chipset-Kennung und eine laufende Nummer beinhaltet.

**5.** Verfahren nach Anspruch 1, zudem umfassend das Senden einer Vielzahl von zusätzlichen Nachrichten, die mithilfe des Sitzungsschlüssels verschlüsselt worden sind, zwischen dem ersten Nachrichtenübermittlungsgerät und dem zweiten Nachrichtenübermittlungsgerät, wobei jede der zusätzlichen Nachrichten eine laufende Nummer beinhaltet, die gegenüber der laufenden Nummer in einer vorhergehenden Nachricht hochgezählt wird.

**6.** Verfahren nach Anspruch 1, zudem umfassend:

Verfallen des Sitzungsschlüssels;
Erzeugen einer zweiten Zufallszahl unter Verwendung des ersten Nachrichtenübermittlungsgeräts;
Wiederholen der Abläufe des Verschlüsseins, Übermittelns und Entschlüsselns in einem Einzelnachrichtenaustausch zum Mitteilen der zweiten Zufallszahl an das zweite Nachrichtenübermittlungsgerät; und
Einrichten eines sicheren Kanals für nachfolgende Kommunikationen zwischen dem ersten Nachrichtenübermittlungsgeräts und dem zweiten Nachrichtenübermittlungsgeräts mithilfe der zweiten Zufallszahl als Schlüsselmaterial für einen neuen Sitzungsschlüssel zum Sichern des Kanals.

**7.** Verfahren nach Anspruch 1, bei welchem das zweite Nachrichtenübermittlungsgerät eine Root-Key-Zuordnungstabelle abspeichert und den korrekten Root-Key, der dem ersten Nachrichtenübermittlungsgerät zugeordnet ist, mithilfe der Chipset-Kennung lokalisiert.

**Revendications**

**1.** Procédé d'authentification d'un premier dispositif de messagerie sur un second dispositif de messagerie et d'établissement d'une clé de session pour des communications sécurisées à l'aide d'un secret partagé dans un échange de message unique, le procédé comprenant :

générer (206) des donnée utiles chiffrées à partir de données utiles non chiffrées à l'aide d'une clé cryptographique générée par une opération de chiffrement par chiffrage par bloc à partir d'une clé racine, d'un nombre aléatoire, d'une valeur initiale et d'une pluralité d'identifiants à l'aide du premier dispositif de messagerie, la clé racine étant un secret partagé entre le premier dispositif de messagerie et le second dispositif de messagerie ;
générer (208) un hachage cryptographique des données utiles chiffrées pour produire une première valeur de hachage à l'aide du premier dispositif de messagerie ;
générer (210) une signature électronique des données utiles chiffrées à partir de la première valeur de hachage et de la pluralité d'identifiants en utilisant l'opération de chiffrement par chiffrage par bloc à l'aide du premier dispositif de messagerie ;
transmettre la pluralité d'identifiants, la signature électronique et les données utiles chiffrées à l'aide du premier dispositif de messagerie au second dispositif de messagerie ;
recevoir (302) la pluralité d'identifiants, la signature électronique et les données utiles chiffrées à partir du message à l'aide du second dispositif de messagerie ;
générer (304) un hachage cryptographique des données utiles chiffrées pour produire une seconde valeur de hachage à l'aide du second dispositif de messagerie ;
vérifier (306) la signature électronique reçue par réalisation d'une opération de déchiffrement par chiffrage par bloc en utilisant au moins une partie de la seconde valeur de hachage et la pluralité d'identifiants reçus à l'aide du second dispositif de messagerie ;
déchiffrer (308) les données utiles chiffrées à l'aide d'une clé cryptographique générée par une opération de déchiffrement par chiffrage par bloc à partir de la clé racine, des identifiants reçus et d'au moins une partie de la signature électronique reçue à l'aide du second dispositif de messagerie pour récupérer le nombre aléatoire ; et
établir un canal sécurisé pour des communications ultérieures par et entre le premier dispositif de messagerie et le second dispositif de messagerie à l'aide du nombre aléatoire en tant que matériel de clé pour la clé de session pour sécuriser le canal.

**2.** Procédé selon la revendication 1, comprenant en outre : générer le nombre aléatoire.

**3.** Procédé selon la revendication 1, dans lequel l'opération de chiffrement et l'opération de déchiffrement sont des chiffrages par bloc.

**4.** Procédé selon la revendication 1, dans lequel la pluralité d'identifiants comprend un identifiant de fournisseur, un identifiant de jeu de puces et un numéro de séquence.

**5.** Procédé selon la revendication 1, comprenant en outre : envoyer une pluralité de messages supplémentaires chiffrés à l'aide de la clé de session entre le premier dispositif de messagerie et le second dispositif de messagerie, chacun des messages supplémentaires comprenant un numéro de séquence qui est incrémenté par rapport au numéro de séquence inclus dans un message précédent.

**6.** Procédé selon la revendication 1, comprenant en outre :

faire expirer la clé de session ;
générer un second nombre aléatoire à l'aide du premier dispositif de messagerie ;
répéter les opérations de chiffrement, de transmission et de déchiffrement dans un échange de message unique pour communiquer le second nombre aléatoire au second dispositif de messagerie ; et
établir un canal sécurisé pour des communications ultérieures entre le premier dispositif de messagerie et le second dispositif de messagerie en utilisant le second nombre aléatoire en tant que matériel de clé pour une nouvelle clé de session pour sécuriser le canal.

**7.** Procédé selon la revendication 1, dans lequel le second dispositif de messagerie stocke une table de recherche de clé racine et localise la clé racine correcte associée au premier dispositif de messagerie à l'aide de l'identifiant de jeu de puces.

100

104

Network

106

102

*FIG. 1*

200

```
           ┌─────────┐
           │  START  │
           └─────────┘
                │
                ▼
        ┌─────────────────┐
        │ Generate random │ ─── 202
        │     number      │
        └─────────────────┘
                │
                ▼
        ┌─────────────────┐
        │ Receive additional │ ─── 204
        │    parameters   │
        └─────────────────┘
                │
                ▼
        ┌─────────────────┐
        │ Generate encrypted data │ ─── 206
        └─────────────────┘
                │
                ▼
        ┌─────────────────┐
        │ Generate hash and │ ─── 208, 210
        │    signature    │
        └─────────────────┘
                │
                ▼
        ┌─────────────────┐
        │ Combine into complete │ ─── 212
        │    message      │
        └─────────────────┘
                │
                ▼
           ┌─────────┐
           │   END   │
           └─────────┘
```

*FIG. 2*

START

300

Receive message
including encrypted data — 302

Extract encrypted data
and parameters — 304

Verify signature — 306

Decrypt encrypted data — 308

END

*FIG. 3*

**EP 3 476 078 B1**

**REFERENCES CITED IN THE DESCRIPTION**

**Patent documents cited in the description**

- WO 2004014018 A1
- US 20160119318 A1
- US 20110183748 A1